# EUROPEAN PATENT APPLICATION

(11) **EP 4 759 590 A1**
(43) Date of publication of application: **17.06.2026**
(21) Application number: 25210976.4
(22) Date of filing: 24.10.2025
(51) Int. Cl.: B60K 1/04

(54) **VEHICLE BATTERY DEVICE AND ELECTRIC VEHICLE**

(30) Priority: 10.12.2024 JP 2024215859
(71) Applicant: TOYOTA JIDOSHA KABUSHIKI KAISHA, Toyota-shi, Aichi-ken 471-8571 (JP)
(72) Inventor: GOTOH, Yutaroh, Toyota-shi, Aichi-ken 471-8571 (JP); KUROYAMA, Yoshinobu, Toyota-shi, Aichi-ken 471-8571 (JP); SODA, Yuki, Toyota-shi, Aichi-ken 471-8571 (JP)
(74) Representative: TBK

(57) **Abstract**

A vehicle battery device includes: plural battery stacks that are disposed in a space that is further downward than a floor panel of a vehicle, and each of which includes plural battery cells; and a bus bar that is flexible and electrically connects two of the battery stacks that are lined-up in a vehicle longitudinal direction.

## Description

### BACKGROUND

### Technical Field

The present disclosure relates to a vehicle battery device and an electric vehicle.

### Related Art

Japanese Patent Application Laid-Open (JP-A) No. 2018-037268 discloses an invention in which battery modules (battery stacks) are provided in a space at the vehicle front side and in a space at the rear side, respectively, and a cooling member, whose rigidity is lower than that of the battery modules, is disposed between these battery modules.
When a collision arises at the vehicle of JP-A No. 2018-037268, there is the concern that a large force will be exerted from one of the battery modules to an adjacent, other battery module via the cooling member.

In view of the above-described circumstances, an object of the present disclosure is to provide a vehicle battery device and an electric vehicle in which it is difficult for adjacent battery stacks to exert a large load on each other when a collision arises at the vehicle.

### SUMMARY

A vehicle battery device of a first aspect has: plural battery stacks that are disposed in a space that is further downward than a floor panel of a vehicle, and each of which has plural battery cells; and a bus bar that is flexible and that electrically connects the battery stacks, which form a row in a vehicle longitudinal direction.

The vehicle battery device of the first aspect has the plural battery stacks that are disposed in a space that is further downward than the floor panel of a vehicle, and that are lined-up in the vehicle longitudinal direction, and a bus bar that is flexible and electrically connects the plural battery stacks. Therefore, when force is exerted on the bus bar from a battery stack, the bus bar flexibly deforms and absorbs at least some of this force. Thus, in the vehicle battery device of the first aspect, when a collision arises at the vehicle, it is difficult for adjacent battery stacks to exert a large load on each other.

In a vehicle battery device of a second aspect, in the first aspect, the bus bar is a layered bus bar that is flexible and that comprises a plural conductors that are layered.

The bus bar of the vehicle battery device of the second aspect is a layered bus bar that is flexible and in which plural conductors are layered. Therefore, when force is exerted on the layered bus bar from a battery stack, the layered bus bar flexibly deforms and absorbs at least some of this force. Thus, in the vehicle battery device of the second aspect, when a collision arises at the vehicle, it is difficult for adjacent battery stacks to exert a large load on each other.

In a vehicle battery device of a third aspect, in the first aspect, at least one of a region, which is a portion of a first vehicle body frame member extending in the vehicle longitudinal direction and which is adjacent at a front side to a front end surface of a second vehicle body frame member extending in a vehicle transverse direction, or a region, which is a portion of the first vehicle body frame member and is adjacent at a rear side to a rear end surface of the second vehicle body frame member, is included in a weak portion, and, as seen in a side view, positions in the vehicle longitudinal direction of the weak portion and of at least a portion of the layered bus bar coincide with one another.

In the vehicle battery device of the third aspect, the vehicle longitudinal direction positions of the weak portion of the first vehicle body frame member of the vehicle, and at least a portion of the layered bus bar, coincide with one another. When a collision arises at the vehicle, it is easy for the vehicle to deform with the weak portion being the origin. Therefore, when a collision arises at the vehicle, it is easy for a large force to be applied to the layered bus bar. In this case, the layered bus bar flexibly deforms and absorbs at least some of this large force. Thus, in the vehicle battery device of the third aspect, when a collision arises at the vehicle, it is difficult for adjacent battery stacks to exert a large load on each other.

In a vehicle battery device of a fourth aspect, in the third aspect, at least a portion of a vehicle body frame member that extends in the vehicle transverse direction is included in the weak portion, and, as seen in a side view, positions in the vehicle longitudinal direction of the weak portion and of at least a portion of the layered bus bar coincide with one another.

In the vehicle battery device of the fourth aspect, at least a portion of the vehicle body frame member that extends in the vehicle transverse direction is included in the weak portion. As seen in a side view, the vehicle longitudinal direction positions of the weak portion and at least a portion of the layered bus bar coincide with one another. Therefore, when a collision arises at the vehicle, it is easy for a large force to be applied to the layered bus bar. Thus, in the vehicle battery device of the fourth aspect, when a collision arises at the vehicle, it is difficult for adjacent battery stacks to exert a large load on each other.

In a vehicle battery device of a fifth aspect, in the third aspect, the vehicle has a pair of left and right first vehicle body frame members that are the vehicle body frame members and extend in the vehicle longitudinal direction, and a second vehicle body frame member that is the vehicle body frame member and extends in the vehicle transverse direction while connecting together front end portions or rear end portions of the left and right first vehicle body frame members, and portions of the first vehicle body frame members, which are adjacent to a front end surface or a rear end surface of the second vehicle body frame member as seen in a side view, are included in the weak portion.

In the vehicle battery device of the fifth aspect, portions of the first vehicle body frame members, which are adjacent to the front end surface or the rear end surface of the second vehicle body frame member as seen in a side view, are included in the weak portion. Therefore, when a collision arises at the vehicle, it is easy for the vehicle to deform with the weak portions of the first vehicle body frame members being the origin. Thus, in the vehicle battery device of the fifth aspect, when the vehicle deforms with the weak portions of the first vehicle body frame members being the origin, it is difficult for adjacent battery stacks to exert a large load on each other.

In a vehicle battery device of a sixth aspect, in the fifth aspect, the first vehicle body frame members are rockers, and the second vehicle body frame member is a cross member that connects together the front end portions of the left and right rockers.

In the vehicle battery device of the sixth aspect, portions of the first vehicle body frame members, which, as seen in a side view, are adjacent to the front end surface or the rear end surface of the cross member that connects the front end portions of the left and right rockers together, are the weak portions. Therefore, in the vehicle battery device of the sixth aspect, when the vehicle deforms with the weak portions of the first vehicle body frame members being the origin, it is difficult for adjacent battery stacks to exert a large load on each other.

In a vehicle battery device of a seventh aspect, in the fifth aspect, the vehicle includes a floor cross member that is the second vehicle body frame member and is provided between the pair of left and right first vehicle body frame members, and portions of the first vehicle body frame members, which are adjacent to a front end surface of the floor cross member as seen in a side view, are included in the weak portion.

In the vehicle battery device of the seventh aspect, when the vehicle deforms with the origin being the weak portions of the first vehicle body frame members that, as seen in a side view, are adjacent to the front end surface of the floor cross member, it is difficult for adjacent battery stacks to exert a large load on each other.

In a vehicle battery device of an eighth aspect, in the fifth aspect, the first vehicle body frame members are rockers, and the second vehicle body frame member is a rear cross member that connects together the rear end portions of the left and right rockers.

In the vehicle battery device of the eighth aspect, when the vehicle deforms with the origin being the weak portions of the first vehicle body frame members that, as seen in a side view, are adjacent to the front end surface or the rear end surface of the rear cross member, it is difficult for adjacent battery stacks to exert a large load on each other.

In a vehicle battery device of a ninth aspect, in the third aspect or the fourth aspect, the film-shaped conductors of the layered bus bar have first connection portions electrically connected to a first electrical stack that is one of the battery stacks, second connection portions electrically connected to a second electrical stack that is the battery stack positioned at a rear of the first electrical stack, and intermediate portions positioned between the first connection portions and the second connection portions and positioned further downward than the first connection portions and the second connection portions, and positions in the vehicle longitudinal of the weak portion and of at least portions of the intermediate portions coincide with one another.

In the vehicle battery device of the ninth aspect, each of the film-shaped conductors of the layered bus bar includes a first connection portion electrically connected to the first electrical stack, a second connection portion electrically connected to the second electrical stack, and an intermediate portion positioned between the first connection portion and the second connection portion and positioned further downward than the first connection portion and the second connection portion. Therefore, it is easier for the intermediate portions to deform than the first connection portions and the second connection portions. Further, the vehicle longitudinal direction positions of the weak portions and at least portions of the intermediate portions coincide with one another. Thus, in the vehicle battery device of the ninth aspect, when a collision arises at the vehicle, it is difficult for adjacent battery stacks to exert a large load on each other as compared with a case in which the first connection portions or the second connection portions overlap the weak portions as seen in a plan view.

In a vehicle battery device of a tenth aspect, in the ninth aspect, shapes, as seen in a side view, of the intermediate portions are U shapes.

In the vehicle battery device of the tenth aspect, the shapes, as seen in a side view, of the intermediate portions are U shapes. Therefore, in the vehicle battery device of the tenth aspect, when a collision arises at the vehicle, it is difficult for adjacent battery stacks to exert a large load on each other as compared with a case in which the shapes of the intermediate portions as seen in a side view are rectilinear.

In a vehicle battery device of an eleventh aspect, in the ninth aspect, the intermediate portions of the film-shaped conductors that are adjacent in a vertical direction are joined to one another.

In the vehicle battery device of the eleventh aspect, it is difficult for the electrical resistance of the layered bus bar to vary.

In a vehicle battery device of a twelfth aspect, in the first aspect or the second aspect, all of the battery stacks are housed within a single battery case, and the battery case is provided in a space that is further downward than the floor panel, and is supported at the vehicle.

In the vehicle battery device of the twelfth aspect, all of the battery stacks are housed within a single battery case. Therefore, in the vehicle battery device of the twelfth aspect, all of the battery stacks can be installed in the vehicle by mounting the battery case to the vehicle.

An electric vehicle of a thirteenth aspect has the vehicle battery device of any of the first aspect through the twelfth aspect.

As described above, the vehicle battery device and electric vehicle relating to the present disclosure have the excellent effect that it is difficult for adjacent battery stacks to exert a large load on each other when a collision arises at the vehicle.

### BRIEF DESCRIPTION OF THE DRAWINGS

Exemplary embodiments of the present disclosure will be described in detail based on the following figures, wherein:
Fig. 1 is a schematic plan view of a portion of vehicle body frame members of an electric vehicle equipped with a battery device relating to a first embodiment, and the battery device;
Fig. 2 is a schematic perspective view in which a portion of the vehicle body frame members,
a portion of a floor panel and a portion of the battery device are viewed from a front side;
Fig. 3 is a schematic sectional view along arrow line 3-3 of Fig. 2;
Fig. 4 is a schematic sectional view along arrow line 4-4 of Fig. 2;
Fig. 5 is a schematic sectional view of the vehicle body frame members and the battery device;
Fig. 6 is a schematic sectional view of the vehicle body frame members and the battery device at a region that is different than in Fig. 5;
Fig. 7 is a schematic sectional view of the vehicle body frame members and the battery device at a region that is different than in Fig. 5 and Fig. 6;
Fig. 8 is a schematic side view of a positive electrode terminal, a negative electrode terminal and a layered bus bar;
Fig. 9 is a schematic side view of film-shaped conductors of the layered bus bar;
Fig. 10 is a cross-sectional view, similar to Fig. 6, at a time when a collision of the vehicle arises;
Fig. 11 is a cross-sectional view, similar to Fig. 1, of an electric vehicle equipped with a battery device relating to a second embodiment;
Fig. 12 is a schematic sectional view of the vehicle body frame members and the battery device;
Fig. 13 is a cross-sectional view, similar to Fig. 1, of an electric vehicle equipped with a battery device relating to a third embodiment;
Fig. 14 is a schematic sectional view of the vehicle body frame members and the battery device; and
Fig. 15 is a schematic sectional view of the vehicle body frame members and the battery device at a region different than in Fig. 14.

### DETAILED DESCRIPTION

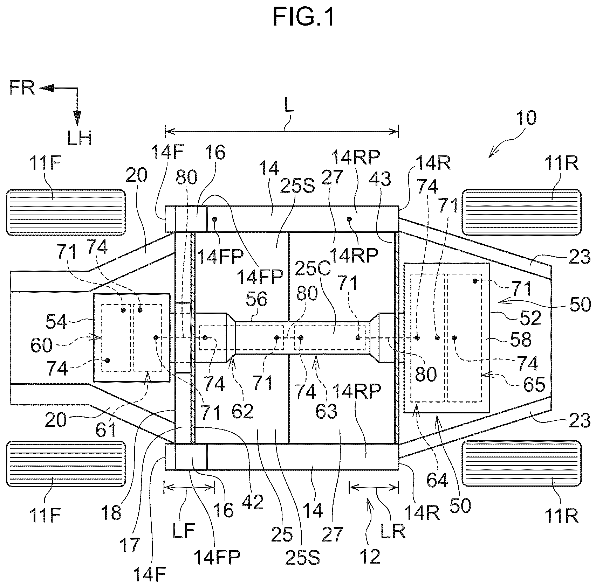

A vehicle battery device relating to a first embodiment is described hereinafter with reference to Fig. 1 through Fig. 10. Note that arrow UP, arrow FR and arrow LH in the respective drawings indicate the upper side in the vehicle vertical direction, the front side in the vehicle longitudinal direction, and the left side in the vehicle left-right direction, respectively.

A vehicle (electric vehicle) 10 of the present embodiment is a battery electric vehicle (BEV). Note that the vehicles in the second and third embodiments and the respective modified examples that are described hereinafter also are battery electric vehicles. As illustrated in Fig. 1, the vehicle 10 includes a pair of left and right front wheels 11F, a pair of left and right rear wheels 11R, and vehicle body frame members 12 that include plural members. The vehicle body frame members 12 of the present embodiment include rockers (first vehicle body frame members) 14, a dash cross member (second vehicle body frame member) (cross member) 17, front side members 20, rear side members 23 and floor cross members (second vehicle body frame members) 27.

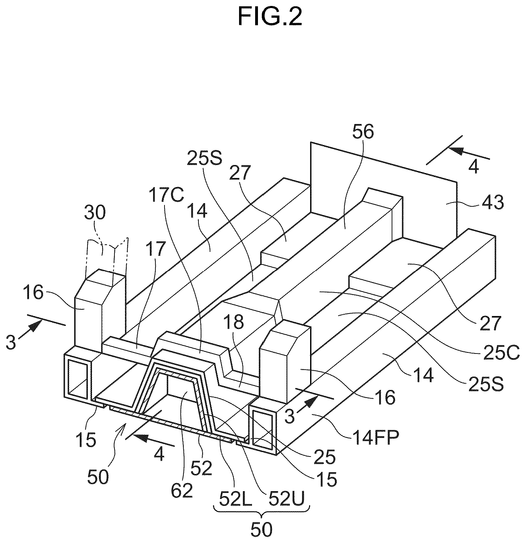

The vehicle 10 includes the left and right pair of rockers 14 that are made of metal and extend in the vehicle longitudinal direction. As illustrated in Fig. 2, the cross-sectional shape when the rocker 14 is cut along a plane orthogonal to the longitudinal direction is substantially rectangular. Flanges 15 that extend toward the inner side are provided at the lower end portions of the facing surfaces of the left and right rockers 14.

Here, as illustrated in Fig. 1, the longitudinal direction length (entire length) of the rocker 14 is defined as L, and the longitudinal direction distance from a front end surface 14F of a predetermined region 14FP of the rocker 14 is defined as LF. In this case, if LF/L is 1/5 or less, the predetermined region 14FP is included in the "front end portion 14FP of the rocker 14". Namely, the "front end portion 14FP of the rocker 14" is the region that is positioned furthest forward when the rocker 14 is divided equally into five regions of equal longitudinal lengths. Further, as illustrated in Fig. 1, the longitudinal direction distance from a rear end surface 14R of a predetermined region 14RP of the rocker 14 is defined as LR. In this case, if LR/L is 1/5 or less, the predetermined region 14RP is included in the "rear end portion 14RP of the rocker 14". Namely, the "rear end portion 14RP of the rocker 14" is the region that is positioned furthest rearward when the rocker 14 is divided equally into five regions of equal longitudinal lengths.

As illustrated in Fig. 1 and Fig. 2, the lower end portions of front body pillars 16 made of metal are fixed to the upper surfaces of the front end portions 14FP of the left and right rockers 14, respectively. The left and right both end portions of the dash cross member 17, which is made of metal and extends in the vehicle left-right direction, are fixed to the lower end portions of the inner side surfaces, which are flat surfaces, of the left and right front body pillars 16, respectively. Namely, the dash cross member 17 connects the front end portions 14FP of the rockers 14 to one another via the front body pillars 16. The shape, as seen in a front view, of a central portion 17C in the left-right direction of the dash cross member 17 is a substantially trapezoidal shape. Rear end surfaces of the pair of left and right front side members 20 made of metal are fixed to the left and right both end portions of a front end surface 18 of the dash cross member 17, respectively. The front end surfaces of the pair of left and right rear side members 23 made of metal are fixed to the rear end surfaces 14R of the left and right rockers 14, respectively.

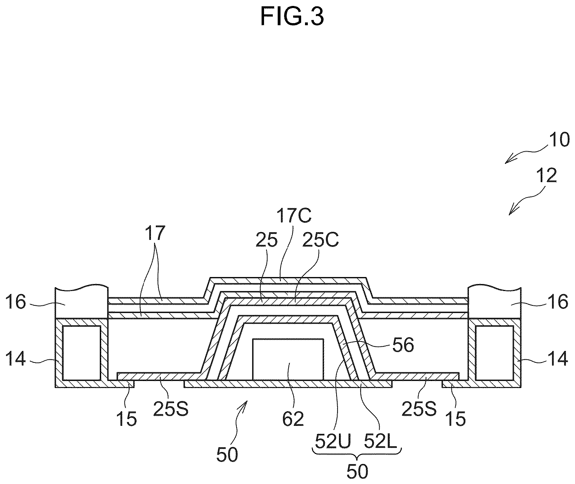

Moreover, as illustrated in Fig. 2 and Fig. 3, the left and right both side edge portions of a floor panel 25 made of metal are placed on the upper surfaces of the flanges 15 of the left and right rockers 14, and the floor panel 25 is fixed to the flanges 15. The floor panel 25 includes a center structural portion 25C structuring the central portion in the left-right direction and extending the longitudinal direction as seen in a plan view, and a pair of side structural portions 25S that are shaped as flat plates and extend toward the lateral sides from the left and right lower edge portions of the center structural portion 25C, respectively. As illustrated in Fig. 3, the cross-sectional shape, which is cut along a cross-section orthogonal to the longitudinal direction, of the center structural portion 25C is substantially quadrangular. The cross-sectional shape of the center structural portion 25C differs depending on the longitudinal direction position thereof. Moreover, the upper surface of the front portion of the center structural portion 25C is fixed to the inner surface of the central portion 17C of the dash cross member 17.

As illustrated in Fig. 1 and Fig. 2, the lower surfaces of the pair of left and right floor cross members 27 are fixed to the upper surfaces of the rear portions of the left and right side structural portions 25S of the floor panel 25, respectively. The floor cross members 27 extend in the vehicle left-right direction, and the left and right both end surfaces thereof are fixed to the left and right rockers 14 and the side surfaces of the center structural portion 25C, respectively. The cross-section, which is cut along a plane orthogonal to the vehicle left-right direction, of the floor cross member 27 is a substantially rectangular shape whose longitudinal dimension is greater than its vertical dimension.

By the way, when the vehicle 10 collides with a collision object while moving relatively in the vehicle longitudinal direction, there are cases in which the vehicle 10 deforms so as to form a substantial V shape as seen in a side view. Namely, there are cases in which the vehicle 10 bends as seen in a side view, with predetermined regions thereof being the origin. Portions of the vehicle body frame members 12 that easily become the origin of such bending (deformation) are called "weak portions".

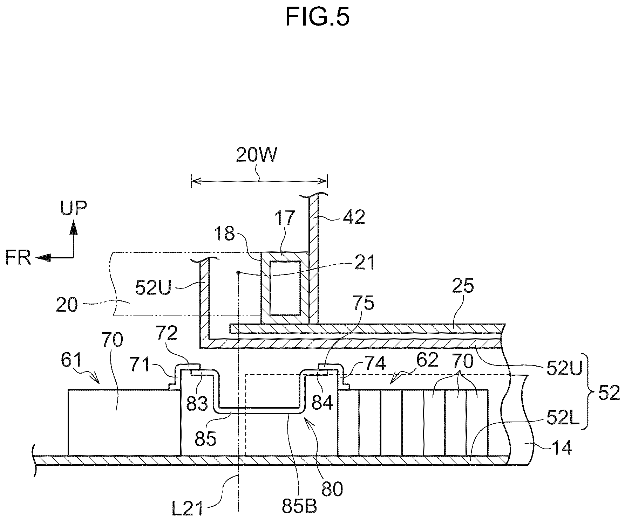

For example, it is it is easy for rear end portions 21 of the left and right front side members 20, which are connected to the front end surface 18 of the dash cross member 17 as illustrated in Fig. 5, to become the origin of bending at the time of a collision. As seen in a side view, the rear end portion 21 of the front side member 20 is adjacent to the front end surface 18 of the dash cross member 17. Portions of the dash cross member 17 and the front side member 20, which include the rear end portion 21 as seen in a side view and have a width of a certain extent in the longitudinal direction, are a weak portion 20W. The range of the weak portion 20W is described later.

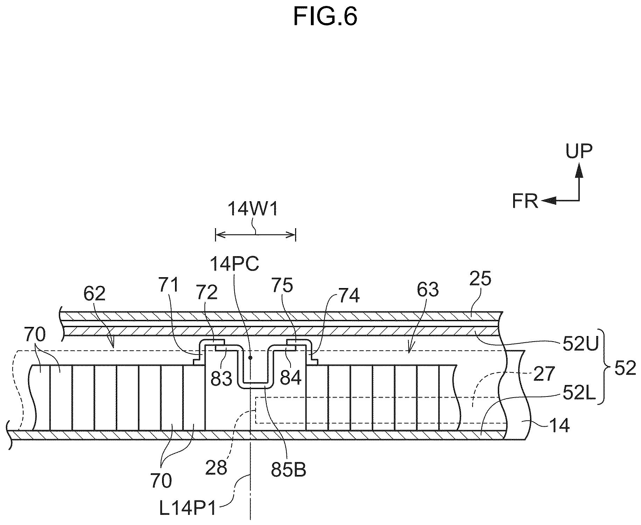

Further, as is clear from Fig. 1 and Fig. 6, it is easy for region 14PC, which is positioned directly in front of front end surface 28 of the floor cross member 27, at the rocker 14 to become the origin of bending at the time of a collision. As seen in a side view, the region 14PC of the rocker 14 is adjacent to the front end surface 28 of the floor cross member 27. Portions of the rocker 14 and the floor cross member 27, which include the region 14PC as seen in a side view and have a width of a certain extent in the longitudinal direction, are a weak portion 14W1. The range of the weak portion 14W1 is described later.

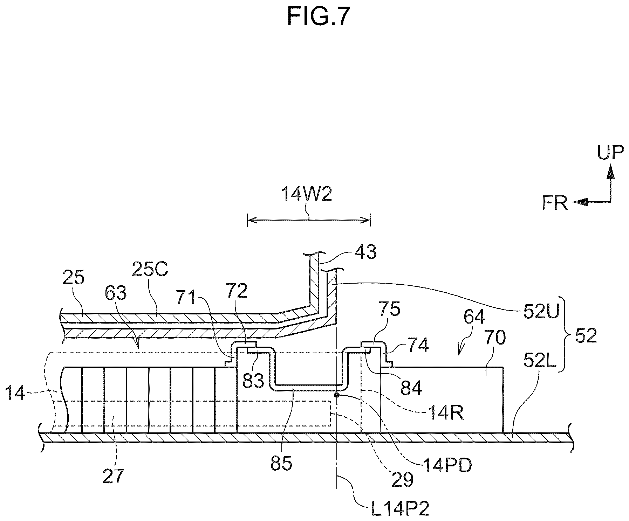

As is clear from Fig. 1 and Fig. 7, it is easy for region 14PD, which is positioned directly rearward of rear end surface 29 of the floor cross member 27 as seen in a side view, at the rocker 14 to become the origin of bending at the time of a collision. As seen in a side view, the region 14PD of the rocker 14 is adjacent to the rear end surface 29 of the floor cross member 27. Portions of the rocker 14 and the floor cross member 27, which include the region 14PD as seen in a side view and have a width of a certain extent in the longitudinal direction, are a weak portion 14W2. The range of the weak portion 14W2 is described later.

As illustrated in Fig. 1 and Fig. 2, a battery device 50 is provided beneath the dash cross member 17, the front side members 20, the rear side members 23 and the floor panel 25. The battery device 50 includes one battery case 52, plural battery stacks 60, 61, 62, 63, 64, 65, and plural layered bus bars 80. The electric power of the battery device 50 in the present embodiment is, for example, supplied to an electric motor (not illustrated) that applies driving force to the driving wheels that are at least one of the front wheels 11F and the rear wheels 11R.

The battery case 52 is a hollow member manufactured of a hard material. As illustrated in Fig. 1 through Fig. 4, the battery case 52 includes a front structural portion 54, an intermediate structural portion 56, and a rear structural portion 58. The planar shape of the front structural portion 54 is a substantially rectangular shape, the planar shape of the intermediate structural portion 56 is a substantially rectangular shape that is long in the longitudinal direction, and the planar shape of the rear structural portion 58 is a substantially rectangular shape that is long in the left-right direction. The inner space of the front structural portion 54 and the inner space of the intermediate structural portion 56 communicate with one another, and the inner space of the intermediate structural portion 56 and the inner space of the rear structural portion 58 communicate with one another. Moreover, the front structural portion 54 is higher than the intermediate structural portion 56, and the rear structural portion 58 is higher than the front structural portion 54. As illustrated in Fig. 2, the battery case 52 includes a lower case 52L and an upper case 52U. The lower case 52L is a rectangular, flat plate whose longitudinal dimension is larger than its left-right dimension. The sectional shape, which is cut along a plane orthogonal to the longitudinal direction, of the upper case 52U is substantially quadrangular. However, the sectional shape of the upper case 52U differs depending on the longitudinal direction position thereof. Moreover, the sectional shape, at each position in the longitudinal direction, of the upper case 52U is substantially similar to the sectional shape, at each position in the longitudinal direction, of the center structural portion 25C. The battery case 52 is structured by the upper surface of the lower case 52L and the lower end surface of the upper case 52U being joined together. The upper surface of the upper case 52U is fixed to the lower surface of the floor panel 25.

The six battery stacks 60, 61, 62, 63, 64, 65 are provided at the interior of the battery case 52. Each of the battery stacks 60, 61, 62, 63, 64, 65 includes plural battery cells 70 lined-up along a rectilinear direction, plural spacers (not illustrated) positioned between the adjacent battery cells 70, a pair of end plates (not illustrated), and a restraining member (not illustrated) that makes the battery cells 70, the spacers and the end plates integral.

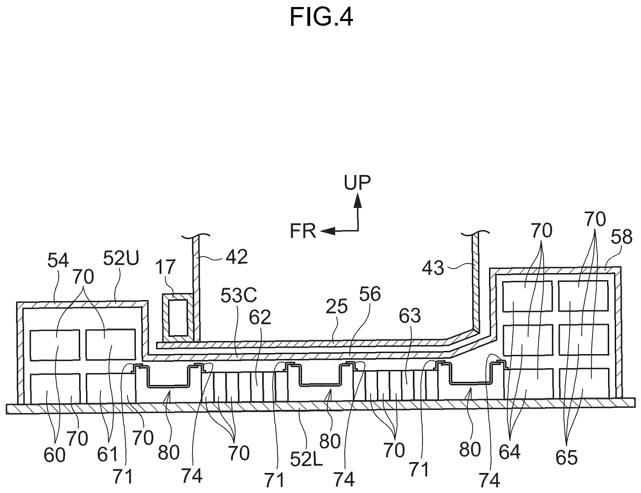

As illustrated in Fig. 1 and Fig. 4, the battery stacks 60, 61 are provided at the interior of the front structural portion 54. The respective battery cells 70 included in the battery stacks 60, 61 are lined-up in the left-right direction. Moreover, as illustrated in Fig. 4, there are two of each of the battery stacks 60, 61 that are lined-up vertically. The lower surfaces of the battery stacks 60, 61 at the lower side are fixed to the upper surface of the lower case 52L. The battery stack 60 at the lower side and the battery stack 60 at the upper side are electrically connected, and the battery stack 61 at the lower side and the battery stack 61 at the upper side are electrically connected. The positive electrode terminals and negative electrode terminals of the respective battery cells 70 contained in the battery stacks 60, 61 are respectively connected in series by bus bars for cell connection (not illustrated). However, bus bars for cell connection are not connected to one of the positive electrode terminals 71 and one of the negative electrode terminals 74 of the battery stack 60 at the lower side, and one of the positive electrode terminals 71 and one of the negative electrode terminals 74 of the battery stack 61 at the lower side, which are illustrated in Fig. 1. The positive electrode terminal 71 of the battery stack 60 at the lower side and the negative electrode terminal 74 of the battery stack 61 at the lower side are connected by a bus bar for joining (not illustrated).

As illustrated in Fig. 5, the shapes, as seen in a side view, of the positive electrode terminals 71 and the negative electrode terminals 74 that are made of metal and provided at the battery cells 70 are substantial crank shapes. A connection portion 72, which extends substantially horizontally toward the side opposite the battery cell 70, is provided at the upper end portion of the positive electrode terminal 71. A connection portion 75, which extends substantially horizontally toward the side opposite the battery cell 70, is provided at the upper end portion of the negative electrode terminal 74. Moreover, as illustrated in Fig. 5, the negative electrode terminal 74, which is provided at the battery cell 70 that is positioned the furthest forward of the battery stack 62, faces, in the longitudinal direction, the positive electrode terminal 71 of the battery stack 61 at the lower side.

As illustrated in Fig. 1 and Fig. 4, the battery stacks 62, 63 are provided at the interior of the intermediate structural portion 56. The respective battery cells 70 included in the battery stacks 62, 63 are lined-up in the longitudinal direction. The lower surfaces of the battery stacks 62, 63 are fixed to the upper surface of the lower case 52L. The positive electrode terminals and negative electrode terminals of the respective battery cells 70 included in the battery stacks 62, 63 are connected in series by bus bars for cell connection. However, bus bars for cell connection are not connected to one of the positive electrode terminals 71 and one of the negative electrode terminals 74 of the battery stack 62, and one of the positive electrode terminals 71 and one of the negative electrode terminals 74 of the battery stack 63, that are illustrated in Fig. 1.

As illustrated in Fig. 6, the positive electrode terminal 71 provided at the battery cell 70 that is positioned furthest rearward of the battery stack 62 faces, in the longitudinal direction, the negative electrode terminal 74 of the battery cell 70 that is positioned furthest forward of the battery stack 63.

As illustrated in Fig. 1 and Fig. 4, the battery stacks 64, 65 are provided at the interior of the rear structural portion 58. The respective battery cells 70 included in the battery stacks 64, 65 are lined-up in the left-right direction. Moreover, as illustrated in Fig. 4, there are three of each of the battery stacks 64, 65 that are lined-up vertically. The lower surfaces of the battery stacks 64, 65 that are the lowest are fixed to the upper surface of the lower case 52L. The respective battery stacks 64 are electrically connected to one another, and the respective battery stacks 65 are electrically connected to one another. The positive electrode terminals and negative electrode terminals of the respective battery cells 70 included in the battery stacks 64, 65 are electrically connected in series by bus bars for cell connection, respectively . However, bus bars for cell connection are not connected to one of the positive electrode terminals 71 and one of the negative electrode terminals 74 of the lowest battery stack 64, and one of the positive electrode terminals 71 and one of the negative electrode terminals 74 of the lowest battery stack 65, that are illustrated in Fig. 1. Moreover, as illustrated in Fig. 7, the positive electrode terminal 71, which is provided at the battery cell 70 that is positioned furthest rearward of the battery stack 63, faces, in the longitudinal direction, the negative electrode terminal 74 provided at one of the battery cells 70 of the lowest battery stack 64.

Although not illustrated, the vehicle 10 has an ECU (Electronic Control Unit). One of the negative electrode terminals 74 of the lowest battery stack 60 and one of the positive electrode terminals 71 of the lowest battery stack 65 are electrically connected to the ECU.

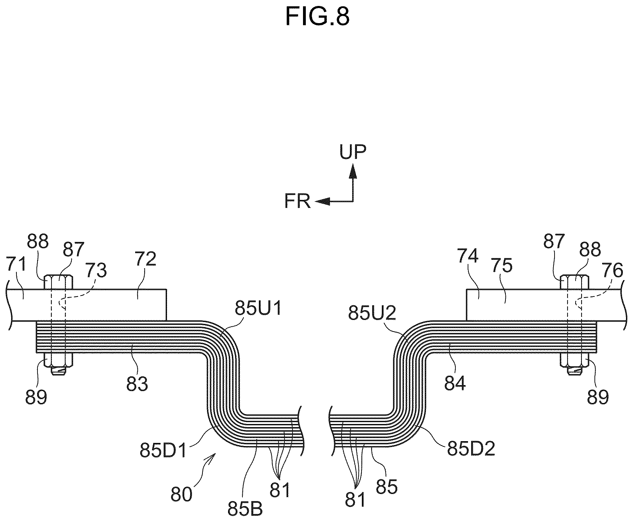

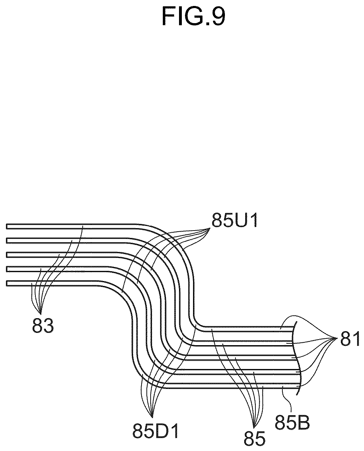

As illustrated in Fig. 5, the positive electrode terminal 71 of the battery cell 70 of the lowest battery stack (first electrical stack) 61 and the negative electrode terminal 74 provided at the battery cell 70 that is furthest forward of the battery stack (second electrical stack) 62 are electrically connected by the layered bus bar 80. As illustrated in Fig. 8 and Fig. 9, the layered bus bar 80 includes a large number of film-shaped conductors (conductors) 81 that are shaped as strips and formed from an electrically-conductive material. The respective film-shaped conductors 81 are flexible. Note that, in Fig. 5 through Fig. 7, the respective layered bus bars 80 are drawn schematically while omitting illustration of the film-shaped conductors 81. The planar shapes of the film-shaped conductors 81 are rectangular shapes whose longitudinal lengths are longer than the left-right widths thereof. The film-shaped conductors 81 are lined-up with one another in the vertical direction. The front end portion of each of the film-shaped conductors 81 is a front side connection portion (first connection portion) 83 that extends substantially in the longitudinal direction, and the rear end portion is a rear side connection portion (second connection portion) 84 that extends substantially in the longitudinal direction. The region between the front side connection portion 83 and the rear side connection portion 84 of each of the film-shaped conductors 81 is an intermediate portion 85 that is substantially U-shaped. As illustrated in Fig. 8, a curve is formed at the connected portion of the front side connection portion 83 and a front end portion 85U1 of the intermediate portion 85 of each of the film-shaped conductors 81, and a curve is formed at the connected portion of the rear side connection portion 84 and a rear end portion 85U2 of the intermediate portion 85 of each of the film-shaped conductors 81. Moreover, a curve is formed at a front end portion 85D 1 of the lower end portion of the intermediate portion 85 of the each of the film-shaped conductors 81, and a curve is formed at a rear end portion 85D2 of the lower end portion of the intermediate portion 85. The longitudinal lengths of the respective film-shaped conductors 81 when the respective film-shaped conductors 81 that are included in the one layered bus bar 80 are extended so as to form rectilinear shapes in the longitudinal direction differ from one another slightly. Namely, the longitudinal lengths of the respective film-shaped conductors 81 are gradually longer from the upper side toward the lower side. Therefore, the longitudinal direction length of the film-shaped conductor 81 that is positioned furthest upward is the smallest, and the longitudinal direction length of the film-shaped conductor 81 that is positioned furthest downward is the largest.

As illustrated in Fig. 8, the front side connection portion 83 of the film-shaped conductor 81 that is positioned furthest upward in the layered bus bar 80 is made to contact the lower surface of the connection portion 72 of the positive electrode terminal 71. Further, a bolt 87 is passed downwardly through a through-hole 73 that passes-through the connection portion 72 in the vertical direction and through-holes (not illustrated) that are formed in the front side connection portions 83 of the respective film-shaped conductors 81 (illustration of the bolt 87 and a nut 89 is omitted in Fig. 5 through Fig. 7). Head portion 88 of the bolt 87 contacts the upper surface of the connection portion 72. The nut 89, which is screwed-together with the lower portion of the bolt 87 that is positioned further downward than the lowest film-shaped conductor 81, press-contacts the front side connection portion 83 that is positioned furthest downward. Namely, the front side connection portions 83 that are adjacent to one another contact one another, and, by utilizing the bolt 87 and the nut 89, the front side connection portions 83 of the respective film-shaped conductors 81 of the layered bus bar 80 are electrically connected to the connection portion 72 of the positive electrode terminal 71.

Moreover, as illustrated in Fig. 8, the rear side connection portion 84 of the film-shaped conductor 81 that is positioned furthest upward in the layered bus bar 80 is made to contact the lower surface of the connection portion 75 of the negative electrode terminal 74. Further, the bolt 87 is passed downwardly through a through-hole 76 that passes-through the connection portion 75 in the vertical direction and through-holes (not illustrated) that are formed in the rear side connection portions 84 of the respective film-shaped conductors 81. The head portion 88 of the bolt 87 contacts the upper surface of the connection portion 75. The nut 89, which is screwed-together with the lower portion of the bolt 87, press-contacts the rear side connection portion 84 that is positioned furthest downward. Namely, the rear side connection portions 84 that are adjacent to one another contact one another, and, by utilizing the bolt 87 and the nut 89, the rear side connection portions 84 of the respective film-shaped conductors 81 of the layered bus bar 80 are electrically connected to the connection portion 75 of the negative electrode terminal 74.

Further, as illustrated in Fig. 5, as seen in a side view, the intermediate portions 85 of the layered bus bar 80, which connects the positive electrode terminal 71 of the battery cell 70 of the battery stack 61 and the negative electrode terminal 74 of the battery stack 62, are positioned directly beneath the rear end portion 21 of the front side member 20. Namely, as seen in a side view, straight line L21, which extends directly downward from the rear end portion 21, and bottom portions 85B of the intermediate portions 85 overlap. Further, as seen in a side view, the longitudinal direction positions of the front end surface 18 of the dash cross member 17 and the bottom portions 85B coincide with one another. Portions of the dash cross member 17 and the front side member 20, which are at the same longitudinal direction position as the entire longitudinal direction region between the front end (the front ends of the front side connection portions 83) and the rear end (the rear ends of the rear side connection portions 84) of the layered bus bar 80 as seen in a side view in a case in which no collision has arisen at the vehicle 10, are the weak portion 20W. Note that, hereinafter, the entire longitudinal direction region between the front end (the front ends of the front side connection portions 83) and the rear end (the rear ends of the rear side connection portions 84) of the layered bus bar 80 is called the "entire region".

As illustrated in Fig. 6, the connection portion 72 of the positive electrode terminal 71 of the battery stack (the first electrical stack) 62 and the connection portion 75 of the negative electrode terminal 74 of the battery stack (the second electrical stack) 63 also are electrically connected by the layered bus bar 80. Although not illustrated in Fig. 6, the connection portion 72 of the positive electrode terminal 71 and the front side connection portions 83 of the layered bus bar 80 (the film-shaped conductors 81) are connected in the way illustrated in Fig. 8 by using the bolt 87 and the nut 89, and the connection portion 75 of the negative electrode terminal 74 and the rear side connection portions 84 of the layered bus bar 80 (the film-shaped conductors 81) are connected in the way illustrated in Fig. 8 by using the bolt 87 and the nut 89.

Moreover, as illustrated in Fig. 6, as seen in a side view, the intermediate portions 85 of the layered bus bar 80, which connects the positive electrode terminal 71 of the battery cell 70 of the battery stack 62 and the negative electrode terminal 74 of the battery stack 63, are positioned directly beneath the region 14PC of the rocker 14. Namely, as seen in a side view, straight line L14P1, which extends directly downward from the region 14PC, and the bottom portions 85B of the intermediate portions 85 overlap. Moreover, as seen in a side view, the longitudinal direction positions of the front end surface 28 of the floor cross member 27 and the bottom portions 85B coincide with one another. Portions of the rocker 14 and the floor cross member 27, which are at the same longitudinal direction position as the entire region of the layered bus bar 80 as seen in a side view in a case in which no collision has arisen at the vehicle 10, are the weak portion 14W1.

As illustrated in Fig. 7, the connection portion 72 of the positive electrode terminal 71 of the battery stack 63 and the connection portion 75 of the negative electrode terminal 74 of the battery stack 64 also are electrically connected by the layered bus bar 80. Although not illustrated in Fig. 7, the connection portion 72 of the positive electrode terminal 71 and the front side connection portions 83 of the layered bus bar 80 (the film-shaped conductors 81) are connected in the way illustrated in Fig. 8 by using the bolt 87 and the nut 89, and the connection portion 75 of the negative electrode terminal 74 and the rear side connection portions 84 of the layered bus bar 80 (the film-shaped conductors 81) are connected in the way illustrated in Fig. 8 by using the bolt 87 and the nut 89.

Moreover, as illustrated in Fig. 7, as seen in a side view, the intermediate portions 85 of the layered bus bar 80, which connects the positive electrode terminal 71 of the battery cell 70 of the battery stack 63 and the negative electrode terminal 74 of the battery stack 64, are positioned directly above the region 14PD of the rocker 14. This region 14PD is adjacent to the rear end surface 29 of the floor cross member 27 as seen in a side view. Namely, as seen in a side view, straight line L14P2, which extends directly upward and downward from the region 14PD, and the bottom portions 85B of the intermediate portions 85 overlap. Moreover, as seen in a side view, the longitudinal direction positions of the rear end surface 29 of the floor cross member 27 and the bottom portions 85B coincide with one another. Portions of the rocker 14 and the floor cross member 27, which are at the same longitudinal direction position as the entire region of the layered bus bar 80 as seen in a side view in a case in which no collision has arisen at the vehicle 10, are the weak portion 14W2.

### (Operation and Effects)

Operation and effects of the first embodiment are described next.

When a front collision or a rear collision occurs at the vehicle 10 of the above-described structure, owing to the impact thereof, the battery stacks 60, 61, 62, 63, 64, 65 will attempt to move in the longitudinal direction within the battery device 50. Namely, there are cases in which, for example, rearwardly-directed force is exerted on the battery stack 61. In this case, rearwardly-directed force is exerted from the battery stack 61 to the layered bus bar 80 that connects the battery stack 61 and the battery stack 62. At this time, the layered bus bar 80 absorbs some of this force due to the intermediate portions 85 of the respective film-shaped conductors 81 deforming in the longitudinal direction. Therefore, it is difficult for this force to be transmitted from the battery stack 61 to the battery stack 62 via the layered bus bar 80. Namely, as compared with a case in which the bus bar that connects the battery stack 61 and the battery stack 62 is a rigid body made of metal, it is difficult for force to be transmitted from the battery stack 61 to the battery stack 62. Further, in a case in which forwardly-directed force is exerted on the battery stack 62, some of this force is absorbed by the layered bus bar 80 that connects the battery stack 61 and the battery stack 62. Moreover, in a case in which the battery stack 62 and the battery stack 63 attempt to approach one another, some of this force is absorbed by the layered bus bar 80 that connects the battery stack 62 and the battery stack 63. Further, in a case in which the battery stack 63 and the battery stack 64 attempt to approach one another, some of this force is absorbed by the layered bus bar 80 that connects the battery stack 63 and the battery stack 64. Therefore, in the battery device 50, when a collision of the vehicle 10 occurs, exertion of a large force on each other by the battery stacks 61, 62, 63, 64 that are adjacent to one another can be suppressed.

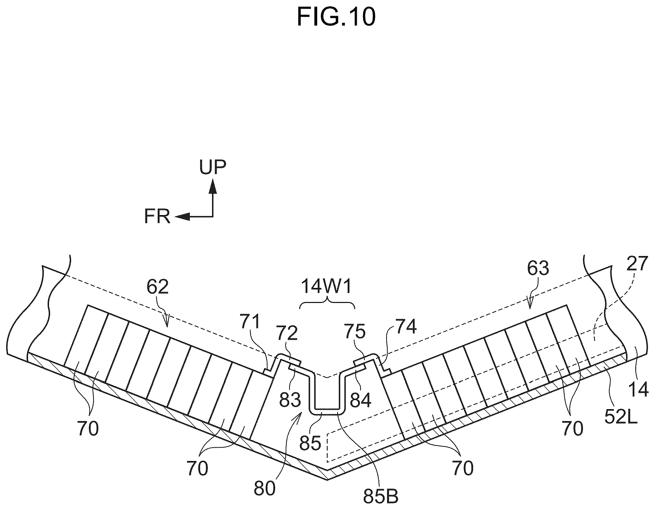

Moreover, when a front collision or a rear collision arises at the vehicle 10 as described above, there is a strong possibility that the vehicle 10 will bend with at least one of the weak portion 14W1, the weak portion 14W2 and the weak portion 20W being the origin. Namely, as illustrated in Fig. 10 for example, there are cases in which the vehicle 10 is bent with the weak portion 14W1 being the origin. In this case, the lower case 52L is bent with the weak portion 14W1 being the origin, and due to this, the battery stack 62 and the battery stack 63 move relatively so as to be inclined with respect to one another. Therefore, force is transmitted from the battery stack 62 and the battery stack 63 to the layered bus bar 80. In this case, the intermediate portions 85, which connects the battery stack 62 and the battery stack 63 and are at the same vehicle longitudinal direction position as the weak portion 14W1 as seen in a side view at a point in time before the collision, deform, and due thereto, some of this force is absorbed by the intermediate portions 85 (the layered bus bar 80). Therefore, even in a case in which the vehicle 10 and the battery device 50 deform such as in Fig. 10, exertion of a large force on each other by the battery stacks 62, 63 that are adjacent to one another can be suppressed.

Note that, in a case in which the vehicle 10 is bent with the origin being the weak portion 14W2 of Fig. 7, some of the force that is transmitted from the battery stack 63 and the battery stack 64 to the layered bus bar 80 is absorbed by the intermediate portions 85 that are at the same vehicle longitudinal direction position asthe weak portion 14W2 as seen in a side view at a point in time before the collision. Further, in a case in which the vehicle 10 is bent with the origin being the weak portion 20W of Fig. 5, some of the force transmitted from the battery stack 61 and the battery stack 62 to the layered bus bar 80 is absorbed by the intermediate portions 85 (the layered bus bar 80) that are positioned directly beneath the weak portion 20W as seen in a side view at a point in time before the collision.

Moreover, the respective film-shaped conductors 81 of the layered bus bar 80 include the front side connection portions 83 that are connected to the one terminals (the positive electrode terminals 71) of the two battery stacks 61, 62, 63, 64 that are adjacent to one another, and the rear side connection portions 84 that are connected to the other terminals (the negative electrode terminals 74), and the intermediate portions 85 that are U-shaped and are positioned between the front side connection portions 83 and the rear side connection portions 84 and are positioned lower than the front side connection portions 83 and the rear side connection portions 84. At least portions of the intermediate portions 85 face the weak portions 14W1, 14W2, 20W in the vertical direction as seen in a side view. It is easier for the intermediate portions 85 to deform than the front side connection portions 83 and the rear side connection portions 84. Therefore, it is difficult for the two battery stacks 61, 62, 63, 64 that are adjacent to one another to exert a large load on one another when a collision of the vehicle 10 arises, as compared with a case in which the front side connection portions 83 or the rear side connection portions 84 face the weak portions 14W1, 14W2, 20W in the vertical direction as seen in a side view.

Moreover, the shapes, as seen in a side view, of the intermediate portions 85 of the respective film-shaped conductors 81 are U-shaped. Therefore, it is easy for the intermediate portions 85 to deform at the time of a collision of the vehicle 10 as compared with a case in which the shapes, as seen in a side view, of the intermediate portions 85 are rectilinear shapes. Namely, it is difficult for the two battery stacks 61, 62, 63, 64 that are adjacent to one another to exert a large load on one another.

All of the battery stacks 61, 62, 63, 64, 65 are accommodated at the interior of the single battery case 52. Therefore, all of the battery stacks 61, 62, 63, 64, 65 can be installed in the vehicle by mounting the battery case 52 to the floor panel 25.

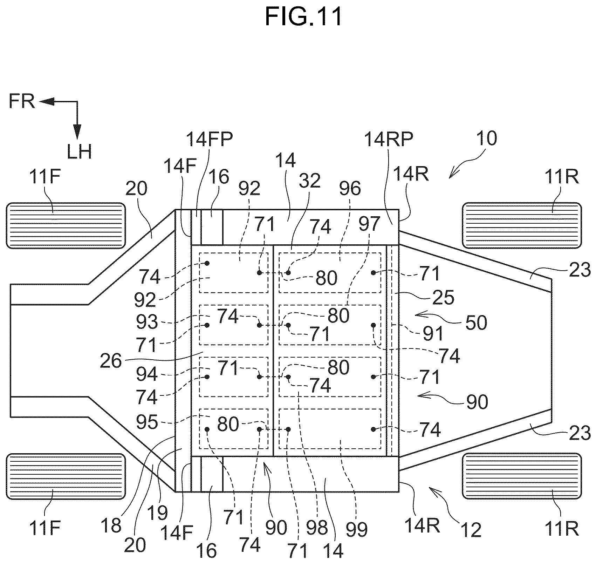

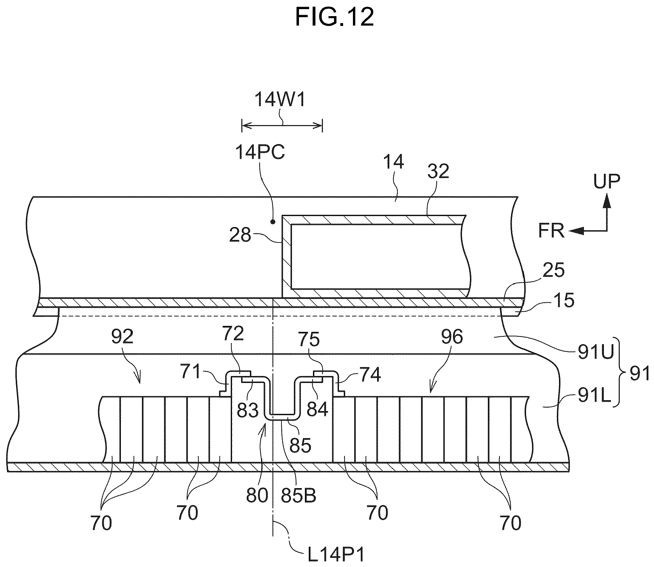

A vehicle battery device and a battery electric vehicle relating to a second embodiment are described next with reference to Fig. 11 and Fig. 12. Note that members that are the same as those of the first embodiment merely are denoted by the same reference numerals, and detailed description thereof is omitted.

In the vehicle 10 of the second embodiment, the basic structure of the vehicle 10 that includes the vehicle body frame members 12, and the structure of a battery device 90, differ from the first embodiment.

In the second embodiment, the left and right both end portions of the rear surface of a dash cross member 19, which is made of metal and extends in the vehicle left-right direction, are fixed to the front end surfaces 14F of the left and right rockers 14, respectively. Namely, the dash cross member 19 connects the front end portions 14FP of the rockers 14 to one another. Moreover, the rear end surfaces of the pair of left and right front side members 20 that are made of metal are fixed to the left and right both end portions of the front end surface 18 of the dash cross member 19, respectively.

Left and right both side edge portions of a floor panel 25 that is made of metal are placed on the upper surfaces of the flanges 15 of the left and right rockers 14, and the floor panel 25 is fixed to the flanges 15. The floor panel 25 is a flat-plate-shaped member. Further, as illustrated in Fig. 11, the lower surface of one floor cross member 32 is fixed to the upper surface of the rear portion of the floor panel 25. The floor cross member 32 extends in the vehicle left-right direction, and the left and right both end surfaces thereof are fixed to the left and right rockers 14, respectively. The sectional shape, which is cut along a plane orthogonal to the vehicle left-right direction, of the floor cross member 32 is a substantially rectangular shape whose longitudinal dimension is greater than its vertical dimension.

The battery device 90 includes a single battery case 91 that is a hollow member structured from a hard material and whose planar shape is substantially square. As illustrated in Fig. 12, the battery case 91 includes a lower case 91L and an upper case 91U. The lower case 91L is a hollow member whose entire upper surface is open. The upper case 91U is a hollow member whose entire lower surface is open. The battery case 91 is structured due to the upper end surface of the lower case 91L and the lower end surface of the upper case 91U being joined together. The upper surface of the upper case 91U is fixed to the lower surface of the floor panel 25, and the left and right both side edge portions of the battery case 91 are fixed to the left and right rockers 14.

Eight battery stacks 92, 93, 94, 95, 96, 97, 98, 99 are provided at the interior of the battery case 91. Each of the battery stacks 92, 93, 94, 95, 96, 97, 98, 99 includes the plural battery cells 70 lined-up along the longitudinal direction, plural spacers, a pair of end plates, and a restraining member. The lower surfaces of the battery stacks 92, 93, 94, 95, 96, 97, 98, 99 are fixed to the bottom portion of the lower case 91L.

The number of the battery cells 70 included in the four battery stacks 96, 97, 98, 99 positioned at the rear side is greater than the number of the battery cells 70 included in the four battery stacks 92, 93, 94, 95 positioned at the front side. The battery stack 92 and the battery stack 96 face one another in the longitudinal direction. The battery stack 93 and the battery stack 97 face one another in the longitudinal direction. The battery stack 94 and the battery stack 98 face one another in the longitudinal direction. The battery stack 95 and the battery stack 99 face one another in the longitudinal direction.

As illustrated in Fig. 11, the positive electrode terminal 71 of the battery stack (first electrical stack) 92 and the negative electrode terminal 74 of the battery stack (second electrical stack) 96 are connected by the layered bus bar 80. The negative electrode terminal 74 of the battery stack 93 and the positive electrode terminal 71 of the battery stack 97 are connected by the layered bus bar 80. The positive electrode terminal 71 of the battery stack 94 and the negative electrode terminal 74 of the battery stack 98 are connected by the layered bus bar 80. The negative electrode terminal 74 of the battery stack 95 and the positive electrode terminal 71 of the battery stack 99 are connected by the layered bus bar 80. Moreover, the positive electrode terminal 71 of the battery stack 96 and the negative electrode terminal 74 of the battery stack 97, and the positive electrode terminal 71 of the battery stack 93 and the negative electrode terminal 74 of the battery stack 94, and the positive electrode terminal 71 of the battery stack 98 and the negative electrode terminal 74 of the battery stack 99, are connected by bus bars for joining (not illustrated). The negative electrode terminal 74 of the battery stack 92 and the positive electrode terminal 71 of the battery stack 95 are connected to the ECU.

As illustrated in Fig. 12, the connection portion 72 of the positive electrode terminal 71 of the battery cell 70 positioned furthest rearward of the battery stack 92 and the connection portion 75 of the negative electrode terminal 74 of the battery cell 70 positioned furthest forward of the battery stack 96 are connected by the layered bus bar 80 in the way illustrated in Fig. 8. Although not illustrated, the connection portion 75 of the negative electrode terminal 74 of the battery cell 70 positioned furthest rearward of the battery stack 93 and the connection portion 72 of the positive electrode terminal 71 of the battery cell 70 positioned furthest forward of the battery stack 97 are connected by the layered bus bar 80 in the way illustrated in Fig. 8. Further, the connection portion 72 of the positive electrode terminal 71 of the battery cell 70 positioned furthest rearward of the battery stack 94 and the connection portion 75 of the negative electrode terminal 74 of the battery cell 70 positioned furthest forward of the battery stack 98 are connected by the layered bus bar 80 in the way illustrated in Fig. 8. The connection portion 75 of the negative electrode terminal 74 of the battery cell 70 positioned furthest rearward of the battery stack 95 and the connection portion 72 of the positive electrode terminal 71 of the battery cell 70 positioned furthest forward of the battery stack 99 are connected by the layered bus bar 80 in the way illustrated in Fig. 8.

Moreover, as illustrated in Fig. 12, the intermediate portions 85 of the layered bus bar 80, which connects the positive electrode terminal 71 of the battery stack 92 and the negative electrode terminal 74 of the battery stack 96, are positioned directly beneath the region 14PC of the rocker 14 as seen in a side view. Namely, as seen in a side view, the straight line L14P1, which extends directly downward from the region 14PC, and the bottom portions 85B of the intermediate portions 85 overlap. Moreover, the longitudinal direction positions of the front end surface 28 of the floor cross member 32 and the bottom portions 85B coincide with one another as seen in a side view. Further, although not illustrated, the bottom portions 85B of the intermediate portions 85 of the three layered bus bars 80 that connect the battery stack 93 and the battery stack 96, the battery stack 94 and the battery stack 98, and the battery stack 95 and the battery stack 99 respectively, also face the region 14PC in the vertical direction as seen in a side view. Moreover, portions of the rocker 14 and the floor cross member 32, which are at the same longitudinal direction position as the entire region of the respective layered bus bars 80 as seen in a side view in a case in which no collision has arisen at the vehicle 10, are the weak portion 14W1.

### (Operation and Effects)

Operation and effects of the second embodiment are described next.

When a front collision or a rear collision arises at the vehicle of the second embodiment, there are cases in which the vehicle 10 is bent with the weak portion 14W being the origin. In this case, the lower case 91L is bent with the weak portion 14W1 being the origin, and due to this, the battery stack 92 and the battery stack 96 move relatively so as to be inclined with respect to one another (not illustrated). Therefore, force is transmitted from the battery stack 92 and the battery stack 96 to the layered bus bar 80. In this case, the intermediate portions 85, which connects the battery stack 92 and the battery stack 96 and are positioned directly beneath the weak portion 14W1 as seen in a side view at a point in time before the collision, deform, and due thereto, some of this force is absorbed by the intermediate portions 85 (the layered bus bar 80). Similarly, due to the three layered bus bars 80 (intermediate portions 85), which connect the battery stack 93 and the battery stack 96, the battery stack 94 and the battery stack 98, and the battery stack 95 and the battery stack 99 respectively, deforming, force exerted on the respective layered bus bars 80 is absorbed. Therefore, even in a case in which the vehicle 10 and the battery device 90 deform, the battery stacks 92, 93, 94, 95, 96, 97, 98, 99 that are adjacent to one another exerting a large load on one another can be suppressed.

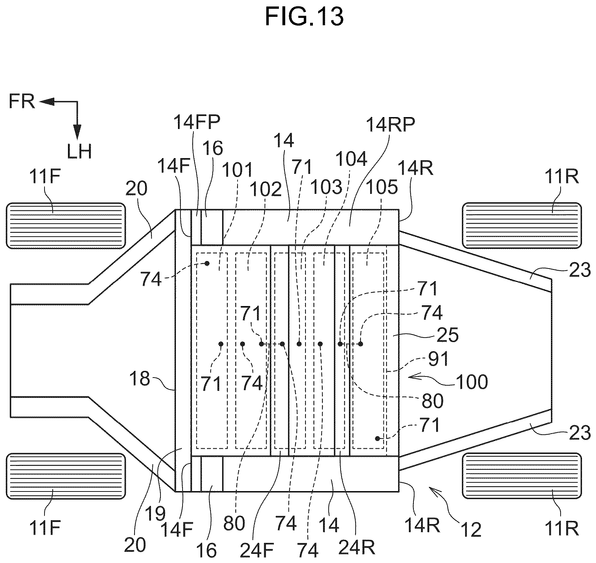

A vehicle battery device and a battery electric vehicle relating to a third embodiment are described next with reference to Fig. 13 through Fig. 15. Note that members that are the same as those of the second embodiment merely are denoted by the same reference numerals, and detailed description thereof is omitted.

In the vehicle 10 of the third embodiment, the structure of the vehicle body frame members 12 and the structure of a battery device 100 differ from the second embodiment.

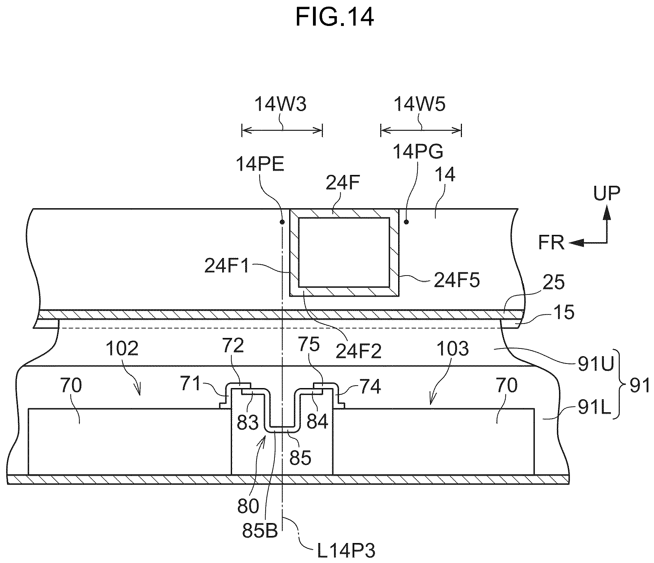

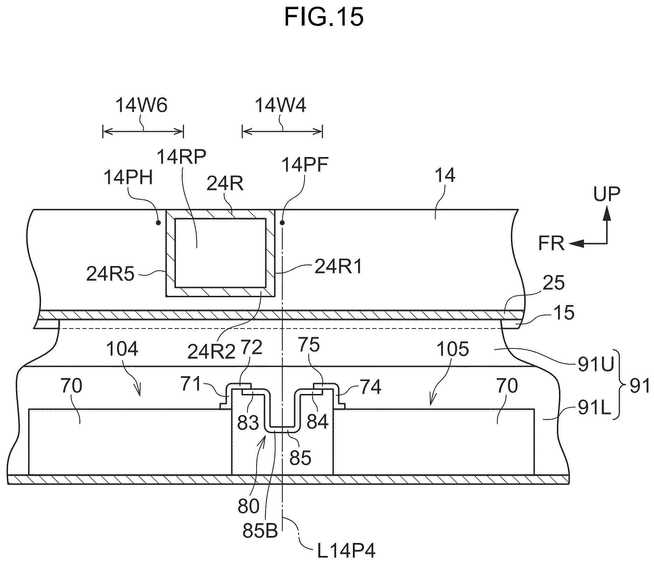

Instead of the floor cross member 32, the vehicle body frame members 12 of the third embodiment include a front cross member (second vehicle body frame member) 24F and a rear cross member (second vehicle body frame member) 24R that are both made of metal. As illustrated in Fig. 14 and Fig. 15, the sectional shapes, which are cut along a plane orthogonal to the vehicle left-right direction, of the front cross member 24F and the rear cross member 24R are substantially rectangular shapes whose longitudinal dimensions are larger than the vertical dimensions. The front cross member 24F and the rear cross member 24R extend in the vehicle left-right direction. The left and right both end surfaces of the front cross member 24F are fixed to the left and right rockers 14, respectively. The rear cross member 24R is positioned rearward of the front cross member 24F, and the left and right both end surfaces of the rear cross member 24R are fixed to the rear end portions 14RP of the left and right rockers 14, respectively.

The battery device 100 includes the battery case 91. The left and right both side edge portions of the battery case 91 are fixed to the left and right rockers 14.

As illustrated in Fig. 13, five battery stacks 101, 102, 103, 104, 105 are provided at the interior of the battery case 91 so as to be lined-up in the longitudinal direction. Each of the battery stacks 101, 102, 103, 104, 105 includes the plural battery cells 70 lined-up along the left-right direction, plural spacers, a pair of end plates, and a restraining member. The lower surfaces of the battery stacks 101, 102, 103, 104, 105 are fixed to the bottom portion of the lower case 91L.

As illustrated in Fig. 13 and Fig. 14, the connection portion 72 of the positive electrode terminal 71 of the battery stack (first electrical stack) 102, and the connection portion 75 of the negative electrode terminal 74 of the battery stack (second electrical stack) 103, are connected by the layered bus bar 80. As illustrated in Fig. 13 and Fig. 15, the connection portion 72 of the positive electrode terminal 71 of the battery stack (first electrical stack) 104, and the connection portion 75 of the negative electrode terminal 74 of the battery stack (second electrical stack) 105, are connected by the layered bus bar 80. Moreover, as illustrated in Fig. 13, the positive electrode terminal 71 of the battery stack 101 and the negative electrode terminal 74 of the battery stack 102, and the positive electrode terminal 71 of the battery stack 103 and the negative electrode terminal 74 of the battery stack 104, are connected by bus bars for joining (not illustrated). Moreover, the negative electrode terminal 74 of the battery stack 101 and the positive electrode terminal 71 of the battery stack 105 are connected to the ECU.

It is easy for region 14PE, which is illustrated in Fig. 14 and is adjacent at the front side to a front end surface 24F1 of the front cross member 24F as seen in a side view, of the left and right rockers 14 to become the origin of bending when a collision arises. Portions of the rocker 14 and the front cross member 24F, which are at the same longitudinal direction position as the entire region of the respective layered bus bars 80 as seen in a side view in a case in which no collision has arisen at the vehicle 10, are weak portion 14W3. The region 14PE is included in the weak portion 14W3. Further, straight line L14P3, which extends directly downward from the region 14PE, and the bottom portions 85B of the intermediate portions 85 overlap. Moreover, the longitudinal direction positions of the front end surface 24F1 of the front cross member 24F and the bottom portions 85B coincide with one another as seen in a side view.

Moreover, it is easy for region 14PF, which is illustrated in Fig. 15 and is adjacent at the rear side to rear end surface 24R1 of the rear cross member 24R as seen in a side view, of the left and right rockers 14 to become the origin of bending when a collision arises. Portions of the rocker 14 and the rear cross member 24R, which are at the same longitudinal direction position as the entire region of the layered bus bar 80 as seen in a side view in a case in which no collision has arisen at the vehicle 10, are weak portion 14W4. The region 14PF is included in the weak portion 14W4. Further, straight line L14P4, which extends directly downward from the region 14PF, and the bottom portions 85B of the intermediate portions 85 overlap. Moreover, the longitudinal direction positions of the rear end surface 24R1 of the rear cross member 24R and the bottom portions 85B coincide with one another as seen in a side view.

### (Operation and Effects)

Operation and effects of the third embodiment are described next.

When a front collision or a rear collision arises at the vehicle 10 of the third embodiment, there are cases in which the vehicle 10 is bent with the weak portion 14W3 being the origin. In this case, the lower case 91L is bent directly beneath the weak portion 14W3 as seen in a side view, and due to this, the battery stack 102 and the battery stack 103 move relatively so as to be inclined with respect to one another (not illustrated). Therefore, force is transmitted from the battery stack 102 and the battery stack 103 to the layered bus bar 80. In this case, the intermediate portions 85, which connects the battery stack 102 and the battery stack 103 and are positioned directly beneath the weak portion 14W3 as seen in a side view at a point in time before the collision, deform, and due thereto, some of this force is absorbed by the intermediate portions 85 (the layered bus bar 80). Therefore, even in a case in which the vehicle 10 and the battery device 100 deform, the battery stacks 102, 103 that are adjacent to one another exerting a large load on one another can be suppressed.

Further, when a front collision or a rear collision arises at the vehicle 10, there are cases in which the vehicle 10 is bent with the weak portion 14W4 being the origin. In this case, the lower case 91L is bent directly beneath the weak portion 14W4 as seen in a side view, and due to this, the battery stack 104 and the battery stack 105 move relatively so as to be inclined with respect to one another (not illustrated). Therefore, force is transmitted from the battery stack 104 and the battery stack 105 to the layered bus bar 80. In this case, the intermediate portions 85, which are positioned directly beneath the weak portion 14W4 as seen in a side view at a point in time when the battery stack 104 and the battery stack 105 are connected and before the collision, deform, and due thereto, some of this force is absorbed by the intermediate portions 85 (the layered bus bar 80). Therefore, even in a case in which the vehicle 10 and the battery device 100 deform, the battery stacks 104, 105 that are adjacent to one another exerting a large load on one another can be suppressed.

Although vehicle battery devices and battery electric vehicles relating to respective embodiments have been described above, the designs thereof can be changed appropriately within a scope that does not depart from the gist of the present disclosure.

The shapes, as seen in a side view, of the intermediate portions 85 of the respective film-shaped conductors 81 of the layered bus bar 80 may be shapes other than U shapes. For example, the shapes, as seen in a side view, of the intermediate portions 85 may be V shapes.

Portions of the respective film-shaped conductors 81 of the layered bus bar 80 may be fixed to one another. For example, the intermediate portions 85 of the respective film-shaped conductors 81may be joined together. For example, the central portions of the respective intermediate portions 85 may be joined together by using laser welding or friction stir welding. By doing so, it is difficult for the interval between the adjacent intermediate portions 85 to vary, and therefore, it is difficult for the electrical resistance of the layered bus bar 80 (the film-shaped conductors 81) to vary.

Instead of the layered bus bar 80, a bus bar that is structured of a single material and is flexible may be used. The shape, as seen in a side view, of this bus bar may be the same as that of the layered bus bar 80. For example, this bus bar can be manufactured by press molding a metal plate that is flexible.

Portions of the rocker 14 and the front cross member 24F, which have a width of a certain extent in the longitudinal direction and include a region 14PG that is adjacent at the rear side to a rear end surface 24F5 of the front cross member 24F as seen in a side view, of the left and right rockers 14 may be a weak portion 14W5 (see Fig. 14). In this case, the battery stacks 102, 103 are disposed such that the entire region of the layered bus bar 80 is positioned directly beneath the weak portion 14W5 as seen in a side view in a case in which no collision has arisen at the vehicle 10.

Portions of the rocker 14 and the rear cross member 24R, which have a width of a certain extent in the longitudinal direction and include a region 14PH that is adjacent at the front side to a front end surface 24R5 of the rear cross member 24R as seen in a side view, of the left and right rockers 14 may be a weak portion 14W6 (see Fig. 15). In this case, the battery stacks 102, 103 are disposed such that the entire region of the layered bus bar 80 is positioned directly beneath the weak portion 14W6 as seen in a side view in a case in which no collision has arisen at the vehicle 10.

The longitudinal direction positions of the entire region of the layered bus bar 80 and the longitudinal direction range of the weak portion as seen in a side view do not have to coincide completely. For example, as seen in a side view, layereda portion of the vehicle body frame members 12 that is facing the entire longitudinal direction region of the intermediate portions 85 of the layered bus bar 80 in the vertical direction may be made to be a weak portion. Further, as seen in a side view, the entire region of the layered bus bar 80, and a joined region that includes a region adjacent to at least one of the front side and the rear side of that entire region, may be made to face a weak portion, that is a portion of the vehicle body frame members 12, in the vertical direction.

As seen in a side view, a region that is different from the intermediate portions 85 of the layered bus bar 80 may be positioned directly beneath at least one of the weak portion and a portion of the vehicle body frame members that is adjacent to the weak portion in the longitudinal direction.

All of or some of the vehicle body frame members 12 may be an integrally molded part manufactured by using diecast aluminum. For example, an integrally molded part that includes regions corresponding to the left and right rockers 14 and regions corresponding to the floor cross members 27 may be manufactured by using diecast aluminum.

The vehicle may be an electric vehicle that is different than a battery electric vehicle. For example, the vehicle may be a hybrid electric vehicle (HEV) or a plug-in hybrid electric vehicle (PHEV).

## Claims

1. A vehicle battery device, comprising:
a plurality of battery stacks that are disposed in a space that is further downward than a floor panel of a vehicle, and each of which includes a plurality of battery cells; and
a bus bar that is flexible and that electrically connects the battery stacks, which form a row in a vehicle longitudinal direction.

2. The vehicle battery device of claim 1, wherein the bus bar is a layered bus bar that is flexible and that comprises a plurality of conductors that are layered.

3. The vehicle battery device of claim 2, wherein:
at least one of a region, which is a portion of a first vehicle body frame member extending in the vehicle longitudinal direction and which is adjacent at a front side to a front end surface of a second vehicle body frame member extending in a vehicle transverse direction, or a region, which is a portion of the first vehicle body frame member and is adjacent at a rear side to a rear end surface of the second vehicle body frame member, is included in a weak portion, and
as seen in a side view, positions in the vehicle longitudinal direction of the weak portion and of at least a portion of the layered bus bar coincide with one another.

4. The vehicle battery device of claim 3, wherein:
at least a portion of a vehicle body frame member that extends in the vehicle transverse direction is included in the weak portion, and
as seen in a side view, positions in the vehicle longitudinal direction of the weak portion and of at least a portion of the layered bus bar coincide with one another.

5. The vehicle battery device of claim 3, wherein:
the vehicle includes a pair of left and right first vehicle body frame members extending in the vehicle longitudinal direction, and a second vehicle body frame member that extends in the vehicle transverse direction while connecting together front end portions or rear end portions of the left and right first vehicle body frame members, and
portions of the first vehicle body frame members, which are adjacent to a front end surface or a rear end surface of the second vehicle body frame member as seen in a side view, are included in the weak portion.

6. The vehicle battery device of claim 5, wherein:
the first vehicle body frame members are rockers, and
the second vehicle body frame member is a cross member that connects together the front end portions of the left and right rockers.

7. The vehicle battery device of claim 5, wherein:
the vehicle includes a floor cross member that is the second vehicle body frame member and is provided between the pair of left and right first vehicle body frame members, and
portions of the first vehicle body frame members, which are adjacent to a front end surface of the floor cross member as seen in a side view, are included in the weak portion.

8. The vehicle battery device of claim 5, wherein:
the first vehicle body frame members are rockers, and
the second vehicle body frame member is a rear cross member that connects together the rear end portions of the left and right rockers.

9. The vehicle battery device of claim 3 or claim 4, wherein:
the bus bar is a layered bus bar that is flexible and that comprises a plurality of conductors that are layered, and
the conductors of the layered bus bar include:
first connection portions electrically connected to a first electrical stack that is one of the battery stacks,
second connection portions electrically connected to a second electrical stack that is the battery stack positioned at a rear of the first electrical stack, and
intermediate portions positioned between the first connection portions and the second connection portions and positioned further downward than the first connection portions and the second connection portions, and
positions in the vehicle longitudinal of the weak portion and of at least portions of the intermediate portions coincide with one another.

10. The vehicle battery device of claim 9, wherein shapes of the intermediate portions, as seen in a side view, are U shapes.

11. The vehicle battery device of claim 9, wherein the intermediate portions of the conductors that are adjacent in a vertical direction are joined to one another.

12. The vehicle battery device of claim 1 or claim 2, wherein:
all of the battery stacks are housed within a single battery case, and
the battery case is provided in a space that is further downward than the floor panel, and is supported at the vehicle.

13. An electric vehicle, comprising the vehicle battery device of claim 1 or claim 2.
